# EUROPEAN PATENT APPLICATION

(11) **EP 2 134 054 A1**
(43) Date of publication of application: **16.12.2009**
(21) Application number: 08706697.3
(22) Date of filing: 18.02.2008
(51) Int. Cl.: H04L 29/06

(54) **A TERMINAL AND METHOD FOR MANAGING ITS APPEARANCE**

(30) Priority: 26.03.2007 CN 200710090080; 08.06.2007 CN 200710126115
(71) Applicant: Huawei Technologies Co., Ltd., Longgang District, Shenzhen Guangdong 518129 (CN)
(72) Inventor: WANG, Rui, Shenzhen Guangdong 518129 (CN); ZHAO, Hui, Shenzhen Guangdong 518129 (CN)
(74) Representative: Pfenning, Meinig & Partner GbR
(86) International application number: PCT/CN2008/070324
(87) International publication number: WO 2008/116404

(57) **Abstract**

A method for managing the appearance is applied to the terminal which appearance set is given in advance. The method includes: receiving the managing instructions that are applied to indicate one of activating, modifying, deleting and querying the appearance set; according to the managing instructions, executing one of activating, modifying, deleting and querying the appearance set. A terminal is also provided. The operation and management of activating, modifying, deleting and querying the terminal appearance set make the terminal's management more conveniently.

## Description

This application claims priorities to the Chinese patent application No. 200710090080.4, entitled "TERMINAL, Storage DEVICE AND LOOK AND FEEL MANAGEMENT, PRESENTATION AND QUERY METHOD" and filed with the Chinese Patent Office on March 26, 2007 and the Chinese patent application No. 200710126115.5, entitled "TERMINAL AND LOOK AND FEEL MANAGEMENT METHOD THEREOF" and filed with the Chinese Patent Office on June 08, 2007, both of which are hereby incorporated by reference in their entireties.

### FIELD OF THE INVENTION

The present invention relates to the communication field and in particular to a terminal and a Look and Feel management method thereof.

### BACKGROUND OF THE INVENTION

A mobile terminal is one of important components in the whole mobile operation service system. A Look and Feel technology accommodating a Look and Feel function of the mobile terminal is currently being developed in order to ensure effectively an experience of a user in using the mobile terminal and improve loyalty of the user.

Remote addition, removal, update and activation/deactivation of the Look and Feel of a terminal, including a theme, a Startup/Shutdown prompt, an embedded link, a menu, a screen saver, a background, may be implemented with some Look and Feel technologies. Existing Look and Feel objects mainly include two categories: one category refers to a Look and Feel element, i.e. the category of manageable Look and Feel information on the terminal, including a background, a screen saver, a ring tone, and the Look and Feel element of the terminal is typically fixed; and the other category refers to a Look and Feel package, i.e. a package of part or all Look and Feel elements and values thereof. There is so far no technology for implementing management on a Look and Feel package, while for a Look and Feel element, such a technology may be implemented as in the existing Open Mobile Alliance Device Management (OMA DM) V1.2 (simply referred to as the DM specification hereinafter).

In the DM specification, operations of installation, update and the like of software and firmware may be enabled in an Over the Air (OTA) way to provide a user-friendly and personalized service and thus enhance a user experience. A third party may be an information management department of a mobile operator, a service provider or a cooperator.

With an existing Look and Feel technology, the Look and Feel of a terminal may be modified with operations of a network on a Look and Feel package and a Look and Feel element in accordance with the DM specification or operations of a user on the Look and Feel package and the Look and Feel element. Further, the terminal also executes a Look and Feel update operation, in other words, the terminal updates the Look and Feel of the terminal in accordance with a preset value of the Look and Feel element.

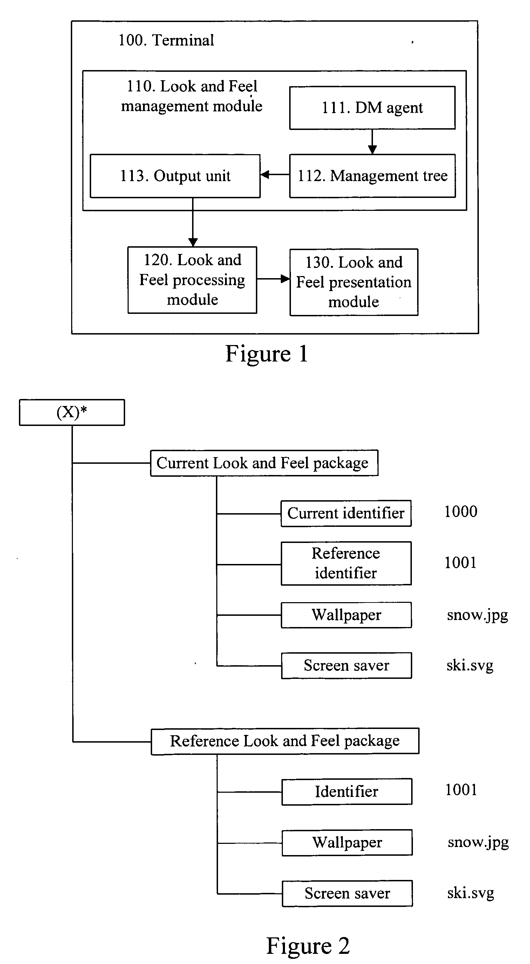

Referring to Figure 1, a terminal 100 using a Look and Feel technology in the prior art includes a Look and Feel management module 110, a Look and Feel processing module 120 and a Look and Feel presentation module 130. The Look and Feel management module 110 includes a DM agent 111, a management tree 112 and an output unit 113. The DM agent 111 is adapted to interpret and execute a management command sent from a DM server. The management tree 112 including some basic Management Objects (MO) is an interface via which the DM server manages the terminal 100 in a DM protocol. Particularly, the Look and Feel as a DM MO, has its configured contents as an intermediate node of the DM management tree 112, and a Look and Feel package is attached to this node. The DM server executes an operation on an object of the management tree to control a management object of the terminal. The operation command on an object of the management tree includes Get, Replace, Execute, Copy and Delete. The output unit 113 outputs the Look and Feel package in the management tree 112 to the Look and Feel processing module 120. The Look and Feel processing module 120 processes and then outputs the Look and Feel package to the Look and Feel presentation module 130 for presentation. The Look and Feel may also be embodied in a way other than the DM way. In order to manage the Look and Feel on the terminal, however, the same package may still be used but a different management channel will be adopted.

In the DM way, for example, the DM management tree 112 for Look and Feel management of the terminal manages per Look and Feel element attached to a Look and Feel node, e.g., a screen saver, an operator logo, and wallpaper. Taking the screen saver as an example, this technical solution for terminal Look and Feel management records all screen savers on the terminal 100 under a node of .\Customization\ScreenSavers\AvailableScreenSavers in the management tree 112 and places a currently used screen saver under a node of .\Customization\ScreenSaver\ActiveSc. The rest Look and Feel elements each respectively serve as a node distributed elsewhere.

The inventors of the invention have identified the following problems of the prior art when making the invention. The above technical solution for terminal Look and Feel management in the prior art has a technical drawback such as that it is not convenient to manage and query about a Look and Feel element.

The above prior art manages per Look and Feel element by an available value and a currently used value. When individual Service Providers (SP) provide Look and Feel packages respectively, Look and Feel elements in the Look and Feel packages have to be separated and then recorded under respective Look and Feel element nodes of the management tree 112. There is no any relationship between the separated packages or the Look and Feel elements, and thus it is not convenient for the SP to manage, such as set, copy and delete, the Look and Feel in the form of a package or a Look and Feel element. For example, when a current package is to be updated, a Look and Feel package has to be input to the terminal and then is split into Look and Feel elements which are recorded respectively under the respective Look and Feel element nodes of the management tree 112. In another example, when an element in a Look and Feel package is to be updated, the element has to be searched for in the respective Look and Feel element node of the management tree 112 and then is replaced. Further, it is impossible for a convenient query about a configured value of a currently used Look and Feel package or a Look and Feel element.

Further, a technical solution for a user to operate a Look and Feel package is also absent in the prior art.

### SUMMARY OF THE INVENTION

Embodiments of the invention provide a terminal and a Look and Feel management method thereof to make a Look and Feel management of the terminal more convenient.

An embodiment of the invention provides a Look and Feel management method applicable to a terminal with a Look and Feel package pre-configured, including:
receiving a management instruction which indicates an operation for one of activation, modification or deletion of or query about the Look and Feel package; and
executing the operation for one of activation, modification or deletion of or query about the Look and Feel package in accordance with the management instruction.

Another embodiment of the invention provides a terminal including:
a Look and Feel package storage unit adapted to store a pre-configured Look and Feel package;
a reception unit adapted to receive a management instruction which indicates an instruction for one of activation, modification or deletion of or query about the Look and Feel package;
an activation unit adapted to activate the Look and Feel package stored in the Look and Feel package storage unit in accordance with the management instruction received by the reception unit;
a deletion unit adapted to delete the Look and Feel package stored in the Look and Feel package storage unit in accordance with the management instruction received by the reception unit;
a modification unit adapted to modify the Look and Feel package stored in the Look and Feel package storage unit in accordance with the management instruction received by the reception unit;
an output unit adapted to output contents of the Look and Feel package stored in the Look and Feel package storage unit in accordance with the management instruction received by the reception unit; and
a query unit adapted to query about the Look and Feel package stored in the Look and Feel package storage unit in accordance with the management instruction received by the reception unit.

The embodiments of the invention may achieve the beneficial effect of a more convenient management on the Look and Feel of the terminal by means of the management of operations of activating, deleting, modifying and querying about a Look and Feel package of the terminal.

### BRIEF DESCRIPTION OF THE DRAWINGS

Figure 1 is a structural schematic diagram of a terminal using a Look and Feel technology in the prior art;
Figure 2 is a structural schematic diagram of a management tree of the terminal according to a first embodiment of the invention;
Figure 3 is a structural schematic diagram of the terminal according to a second embodiment of the invention; and
Figure 4 is a flow chart of the Look and Feel management method according to a second embodiment of the invention.

### DETAILED DESCRIPTION OF THE INVENTION

The invention provides a first embodiment of the terminal including a Look and Feel package storage unit and an output unit. The Look and Feel package storage unit stores data including a current Look and Feel package and a reference Look and Feel package. The reference Look and Feel package includes an identifier, an element and a value thereof, and the current Look and Feel package includes a current identifier, a reference identifier and contents of the reference Look and Feel package corresponding thereto. The output unit is adapted to output the contents of the current Look and Feel package.

For convenient descriptions, definitions of names of a current Look and Feel package, a reference Look and Feel package, a current identifier and a reference identifier in this embodiment and in this context will be described below.

Referring to Figure 2, a current Look and Feel package refers to a Look and Feel package currently applied on a terminal, such as an image intuitively seen on a screen of the terminal, or a ring tone heard by the user. The reference Look and Feel package is defined relatively to the current Look and Feel package. The reference identifier in the current Look and Feel package is also distinguished relatively to the current identifier in the current Look and Feel package which refers to the identifier of the current Look and Feel package per se. When a current Look and Feel package is associated with a reference Look and Feel package, the reference identifier in the current Look and Feel package equals the identifier in the reference Look and Feel package (the identifier of the reference Look and Feel package per se). In a different application, for example, where a reference Look and Feel package is used as a current Look and Feel theme of a terminal, the elements and values of the reference Look and Feel package may be copied into the current Look and Feel package to replace the elements and values in the current Look and Feel package, and also the reference identifier of the current Look and Feel package is updated to the identifier of the reference Look and Feel package.

As may be seen from the above embodiment, the Look and Feel elements are stored in the terminal in the form of a package. In comparison with the technical drawback in the prior art that it is difficult to manage, e.g. store and edit, uniformly the Look and Feel elements because they are dispersed under a plurality of nodes of a management tree, in this embodiment, the Look and Feel elements are stored in the form of a package so that the values of all the elements in the current Look and Feel package may be replaced with the values of the elements in the reference Look and Feel package corresponding to the reference identifier set in the current Look and Feel package and then all the Look and Feel elements in the package are presented on the terminal, thereby realizing an easy and efficient Look and Feel package management on the terminal.

Further, in this embodiment, the contents of the Look and Feel package corresponding to the reference identifier of the current Look and Feel package may be managed or presented together simply by obtaining that reference identifier. In other words, a reference Look and Feel package is used as a Look and Feel theme library, and various current Look and Feel packages may be obtained simply by invoking the reference identifier thereof if needed, thereby enriching presentations of the Look and Feel themes of the terminal.

Further, due to the operations in the form of a package, a presentation on the terminal may be associated with an action such as an incoming event by one path of the current Look and Feel package, thereby effectuating conveniently the use of a Look and Feel theme.

The invention provides a first embodiment of the storage device including a reference Look and Feel package storage unit and a current Look and Feel package storage unit. The reference Look and Feel package storage unit is adapted to store an identifier, an element and a value thereof of the reference Look and Feel package, and the current Look and Feel package storage unit is adapted to store a current identifier, a reference identifier and contents of the reference Look and Feel package corresponding thereto.

As may be seen from above, in comparison with the technical drawback in the prior art that it is difficult to manage, e.g. store and edit, uniformly the Look and Feel elements because they are dispersed under a plurality of nodes of a management tree, in this embodiment, the Look and Feel elements are stored in the form of a package in the Look and Feel package storage unit, and the reference identifier and the values of the elements of the Look and Feel package corresponding thereto are configured in the current Look and Feel package, so that a management such as update of the current Look and Feel package may be convenient because it is sufficient to know the reference identifier, thereby making the Look and Feel package management very easy and efficient. For example, the elements and values thereof of the current Look and Feel package may be replaced together with the contents of the Look and Feel package corresponding to the reference identifier simply by obtaining the reference identifier of the current Look and Feel package. In other words, a reference Look and Feel package is used as a Look and Feel theme library, and various current Look and Feel packages may be obtained simply by invoking the reference identifier thereof if needed, thereby enriching presentations of Look and Feel themes of the terminal.

The invention provides a first embodiment of the Look and Feel management method including pre-configuring a reference Look and Feel package and a current Look and Feel package. The reference Look and Feel package includes an identifier, an element and a value thereof, and the current Look and Feel package includes a current identifier, a reference identifier and contents of the reference Look and Feel package corresponding thereto.

As may be seen from above, in comparison with the technical drawback in the prior art that it is difficult to manage, e.g. store and edit, uniformly the Look and Feel elements because they are dispersed under a plurality of nodes of a management tree, in this embodiment, the Look and Feel elements are stored in the form of a package and the reference identifier and the values of the elements of the Look and Feel package corresponding thereto are configured in the current Look and Feel package, so that a management such as update of the current Look and Feel package may be convenient because it is sufficient to know the reference identifier, thereby making the Look and Feel package management very easy and efficient. For example, the elements and values thereof of the current Look and Feel package may be replaced together with the contents of the Look and Feel package corresponding to the reference identifier simply by obtaining the reference identifier of the current Look and Feel package. In other words, a reference Look and Feel package is used as a Look and Feel theme library, and various current Look and Feel packages may be obtained simply by invoking the reference identifier thereof if needed, thereby enriching presentations of the Look and Feel themes of the terminal.

The invention provides a first embodiment of the method for presenting a current Look and Feel package in which a reference Look and Feel package is provided in advance and an association between the current Look and Feel package and the reference Look and Feel package is established. The method includes: obtaining the reference Look and Feel package in accordance with the association between the current Look and Feel package and the reference Look and Feel package and presenting the Look and Feel according to the reference Look and Feel package.

As may be seen from above, in comparison with the technical drawback in the prior art that it is difficult to manage, e.g. store and edit, uniformly the Look and Feel elements because they are dispersed under a plurality of nodes of a management tree, in this embodiment, the reference Look and Feel package and the current Look and Feel package are firstly pre-configured, and then the association between the current Look and Feel package and the reference Look and Feel package is established, so that a presentation process may be performed for the current Look and Feel package by presenting the reference Look and Feel package and different Look and Feels may be presented by varying the association, thereby making the Look and Feel package presentation very easy and efficient.

The invention provides a first embodiment of the method for querying about a current Look and Feel in which a reference Look and Feel package and a current Look and Feel package are pre-configured, in particular, the reference Look and Feel package includes an identifier and an element and a value thereof, and the current Look and Feel package includes a current identifier, a reference identifier and contents of the reference Look and Feel package corresponding thereto; an instruction to query about the current Look and Feel package is received; and information by which the current Look and Feel package may be identified is returned, which means it is possible to identify which reference Look and Feel package the current Look and Feel package is. The information by which the current Look and Feel package may be identified particularly includes the reference identifier and/or the contents of the reference Look and Feel package corresponding to the reference identifier obtained from the query.

As may be seen from above, in comparison with the technical drawback in the prior art that it is difficult to manage, e.g. store and edit, uniformly the Look and Feel elements because they are dispersed under a plurality of nodes of a management tree, in this embodiment, the current Look and Feel elements are stored in the form of a Look and Feel package on the terminal, so that the current Look and Feel package may be queried in accordance with the current identifier simply by inputting a query instruction carrying the current identifier, and further the reference identifier of the current Look and Feel package or the contents of the reference Look and Feel package corresponding to the reference identifier may be returned, thereby making the query of the Look and Feel package very easy and efficient.

The invention provides a first embodiment of the method for managing a current Look and Feel including: receiving an activation instruction, and applying a reference Look and Feel package as a current Look and Feel, i.e. setting the value of a reference identifier in the current Look and Feel package as the value of the identifier of the reference Look and Feel package and copying the contents of the reference Look and Feel package into the current Look and Feel package.

The invention provides a first embodiment of the method for managing a current Look and Feel including: setting a Look and Feel package as a default Look and Feel package; and updating the current Look and Feel package with the contents in the default Look and Feel package to delete the contents in the current Look and Feel package.

As may be seen from above, in comparison with the technical drawback of the absence of processing after deletion of a Look and Feel package in the prior art, in this embodiment, a Look and Feel package is configured as the default Look and Feel package and the current Look and Feel package is updated with the contents in the default Look and Feel package to delete the contents in the current Look and Feel package, thereby ensuring a normal Look and Feel presentation for the terminal even if the current Look and Feel package is deleted.

The invention will be further described in details below with reference to the drawings by way of embodiments to make the objects, technical solutions and advantages of the invention more apparent.

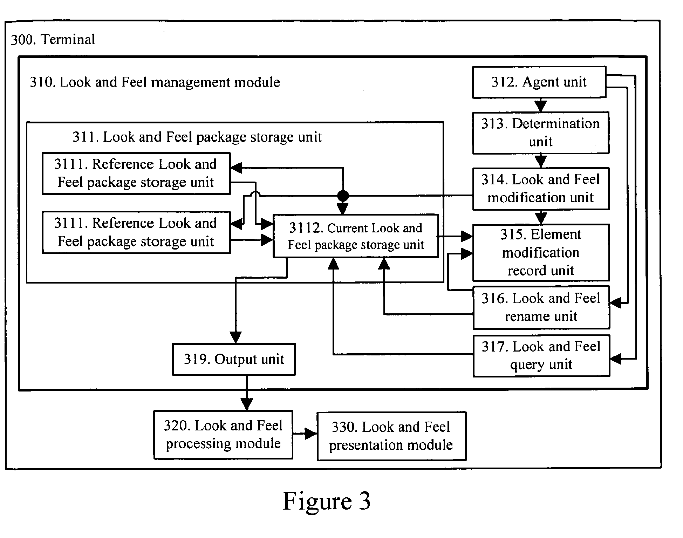

Referring to Figure 3, a second embodiment 300 of the terminal according to the invention includes a Look and Feel management module 310, a Look and Feel processing unit and a Look and Feel presentation unit. The Look and Feel management module 310 includes a Look and Feel package storage unit 311, an agent unit 312 and an output unit 319. The Look and Feel package storage unit 311 includes a reference Look and Feel package storage unit 3111 and a current Look and Feel package storage unit 3112.

Referring to Table 1, the reference Look and Feel package storage unit 3111 is adapted to store a reference Look and Feel package including an identifier and contents of the reference Look and Feel package, and the contents include Look and Feel elements and values thereof. Specifically, an identifier of a reference Look and Feel package is set in a terminal 300 to identify the reference Look and Feel package recording Look and Feel elements and values thereof. The value may take an absolute address such as "Bell.mp3" or a link address such as ".\Customization\PKG 1\Ring" or even contents of a file per se.

**Table 1: Reference Look and Feel Package**

| | | | |
|---|---|---|---|
| ID | Wallpaper | Ring | ... |
| 10002 | Snow.jpg | Wind.mp3 | ... |

Referring to Table 2, the current Look and Feel package storage unit 3112 is adapted to store a current Look and Feel package including a current identifier, a reference identifier and currently used Look and Feel elements and values thereof. A current identifier ID is set in the terminal 300 to identify the current Look and Feel package recording all the currently used Look and Feel elements and values thereof. The values may take an absolute address such as "Bell.mp3" or a link address such as ".\Customization\PKG1\Ring" or even contents of a file per se. A reference identifier RefID is also stored in this package to indicate whether the current Look and Feel package adopts contents of another reference Look and Feel package. If the values of the respective elements in the current Look and Feel package are totally consistent with the elements and values thereof in a reference Look and Feel package, it indicates that the current Look and Feel package adopts the contents of the reference Look and Feel package corresponding to the reference identifier. At this time, the value of the reference identifier in the current Look and Feel package is equal to that of the identifier in the reference Look and Feel package.

**Table 2: Current Look and Feel Package**

| | | | | |
|---|---|---|---|---|
| ID | RefID | Wallpaper | Ring | ... |
| 10000 | 10002 | Snow.jpg | Wind.mp3 | ... |

Stated in another way, there may have a plurality of Look and Feel package on the terminal each of which includes an identifier (ID) and elements. The current Look and Feel package is relatively special in that it includes both the features of the package and the identifier of the corresponding reference Look and Feel package.

The current Look and Feel package and the reference Look and Feel package are two physically separate packages. When a reference Look and Feel package is applied as a current Look and Feel, the value of the reference identifier in the current Look and Feel package is set as the value of the identifier in the reference Look and Feel package and the contents of the reference Look and Feel package are copied into the current Look and Feel package, i.e. the reference Look and Feel package is activated. Obviously, there is provided an activation unit to activate a Look and Feel package.

The agent unit 312 is adapted to receive a Look and Feel management instruction sent from a network or a user and to parse the instruction to obtain an instruction understandable by a corresponding unit in the terminal 300.

The output unit 319 is adapted to obtain and output the contents of the Look and Feel package corresponding to the reference identifier of the current Look and Feel package.

A Look and Feel processing module 320 is adapted to process and then output the current Look and Feel package to the Look and Feel presentation module 330 for presentation. In operation, the agent unit 312 receives and parses the Look and Feel management instruction sent from the network or the user and then inputs the parsed instruction to the corresponding unit. For example, upon reception of an output instruction carrying the current identifier, the agent unit then instructs the output unit 319 to obtain the current Look and Feel package stored in the current Look and Feel package storage unit 3112 from the Look and Feel package storage unit 311. Specifically, the contents of the current Look and Feel package are searched for in accordance with the current identifier in the output instruction, e.g., the output instruction carrying the current identifier (ID=10000), and the package illustrated in Table 2 is found. The contents of the current Look and Feel package are the contents of the reference Look and Feel package corresponding to the reference identifier (Ref ID=10002) (Table 1). Then, the current Look and Feel package having been found is output to the Look and Feel processing module 320, which processes and then outputs the current Look and Feel package to the Look and Feel presentation module 330 for presentation as a "Snow.jpg" wallpaper and a "Wind.mp3" ring tone.

Obviously, this embodiment has the technical effect of the above first embodiment of the terminal 300.

In another embodiment, the terminal 300 further includes a Look and Feel modification unit 314 which is used to connect the agent unit 312 with the Look and Feel package storage unit 311, adapted to receive a modification instruction carrying a new reference identifier from the agent unit 312 and to update the reference identifier, the elements and values thereof in the current Look and Feel package in the Look and Feel package storage unit 311 with the new reference identifier, the elements and values thereof of a Look and Feel package corresponding to the new reference identifier.

Update of the current Look and Feel as desired by the user or the network may be accomplished by modifying the values of all the elements in the current Look and Feel package. All the Look and Feel values may be modified by modifying the reference identifier. The user may modify the reference identifier via a UI interface and the network may do this by sending a command in a DM way or the like.

A reference Look and Feel package is assumed as illustrated in the table below.

**Table 3: Reference Look and Feel Package**

| | | | |
|---|---|---|---|
| ID | Wallpaper | Ring | ... |
| 10002 | Snow.jpg | Wind.mp3 | ... |

The Ref ID in the current Look and Feel package is modified by the user or the network in a way that, for example, a DM server sends a message of Replace (.\Customization\CurrPkg\RefID, 10002) to modify the value of the reference identifier to 10002. Upon detection that the value is modified, the terminal 300 copies automatically the values of the elements included in the reference Look and Feel package corresponding to 10002 into the current Look and Feel package. At this time, the current Look and Feel package is modified to the form of Table 4.

**Table 4: Current Look and Feel Package**

| | | | | |
|---|---|---|---|---|
| ID | RefID | Wallpaper | Ring | ... |
| 10000 | 10002 | Snow.jpg | Wind.mp3 | ··· |

After the modification, the terminal 300 may update the Look and Feel of the terminal 300 in accordance with the contents recorded in the table.

The Look and Feel modification unit 314 in this embodiment may modify the reference identifier and the elements and values thereof directly in a way that the unit 314 obtains the corresponding Look and Feel package in accordance with the new reference identifier in the modification instruction and covers the contents of the current Look and Feel package with the contents (the values of the elements) of the corresponding Look and Feel package, thereby realizing simply, rapidly and conveniently the modification of the current Look and Feel package and enriching the experience of the user.

In another embodiment, the Look and Feel modification unit 314 is adapted to receive a modification instruction carrying a new Look and Feel element value, to replace the value of a corresponding element in the current Look and Feel package with the new element value, to modify the reference identifier and to instruct the output unit 319 to output the modified new Look and Feel package.

A value of a single element may be modified by the user or the network. For example, the user is not interested only in a background and thus requires the background of the terminal 300 to be modified. In this case, the user or the network may modify the value of the single element individually, and after the value of the single element is modified, the reference identifier of the current Look and Feel package may be set as a specific value indicating that the current Look and Feel package at this time is different from any existing reference Look and Feel package.

If the user desires the current background of the terminal 300 to be modified to a picture of flower, he may modify the value of the background by a UI program.

The user selects Flower.jpg, and then the value of the Wallpaper item in the current Look and Feel package is modified to Flower.jpg by the UI program, and the RefID is modified to a specific value such as 0000 indicating that this package makes no reference to any other Look and Feel package. The current Look and Feel package at this time is as illustrated in the table below.

**Table 5: Current Look and Feel Package c**

| | | | | |
|---|---|---|---|---|
| ID | RefID | Wallpaper | Ring | ··· |
| 10000 | 00000 | Flower.jpg | Bell.mp3 | ··· |

After the modification, the terminal 300 updates the Look and Feel of the terminal 300 in accordance with the modified contents.

After the modification, the user may also report the reference identifier of the current Look and Feel package to the server to notify the server about that the user has modified the current Look and Feel package.

In this embodiment, the value of an element in the current Look and Feel package may be modified separately and at the same time the reference identifier may be modified automatically to distinguish from the reference Look and Feel package corresponding to the original reference identifier.

In another embodiment, the terminal 300 further includes an element modification record unit 315 adapted to record and store the new Look and Feel package except the current identifier into the Look and Feel package storage unit 311 after the Look and Feel modification unit 314 modifies the element value.

The network or the user may set the current Look and Feel package as the reference Look and Feel package defined by a new reference identifier by modifying the reference identifier of the current Look and Feel package.

When the network or the user modifies one or more elements in the current Look and Feel package, the Look and Feel modification unit 314 generates a user-defined new Look and Feel package from the modified current Look and Feel package.

The user-defined Look and Feel package is in the same presentation way as the reference Look and Feel package, but is different from the current Look and Feel package in that the former requires no reference identifier. The value of its identifier is a specific value such as 00001 indicating that it is a user-defined Look and Feel package. After the user modifies setting of elements, the user-defined Look and Feel package is generated as illustrated in the table below.

**Table 6: user-defined Look and Feel Package**

| | | | |
|---|---|---|---|
| ID | Wallpaper | Ring | ··· |
| 00001 | Flower. jpg | Bell.mp3 | ··· |

The reference identifier in the current Look and Feel package is set as the identifier of the user-defined Look and Feel package, 00001. Then the user-defined Look and Feel value is applied by activating the current Look and Feel package.

In this embodiment, based upon the modification of the Look and Feel element, the modified current Look and Feel package is stored as a new Look and Feel package to indicate that this Look and Feel package with the modified element is different from any existing Look and Feel package for later use.

In another embodiment, the Look and Feel package storage unit 311 further stores a default Look and Feel package and the Look and Feel modification unit 314 is further adapted to update the contents of the current Look and Feel package with the elements and values thereof of the default Look and Feel package to delete the contents of the current Look and Feel package.

The Look and Feel package storage unit 311 stores a default Look and Feel package and uses the elements and values thereof of the default Look and Feel package as the contents of the current Look and Feel package to delete the contents of the current Look and Feel package. Specifically, the Look and Feel package storage unit 311 may record the identifier of the default Look and Feel package to facilitate the above operations.

The identifier of the default Look and Feel package is set as the reference identifier of the current Look and Feel package and the corresponding elements and values thereof are updated to delete the contents of the current Look and Feel package.

For example, a Look and Feel package with the identifier of 00002 is set as the default Look and Feel package, and then the Look and Feel package storage unit 311 takes the package with the identifier of 00002 as the default Look and Feel package. When the terminal 300 is caused by the user or the server or with another reason to delete the contents of the Look and Feel package used for the current Look and Feel, the current Look and Feel package is updated as follows.

**Table 7: Current Look and Feel Package Using Default Look and Feel Package**

| | | | | |
|---|---|---|---|---|
| ID | RefID | Wallpaper | Ring | ··· |
| 10000 | 00002 | Flower.jpg | Bell.mp3 | ··· |

In the case of absence of another updated Look and Feel package after the contents of the current Look and Feel package are deleted, with this embodiment, the contents of the current Look and Feel package may be updated as the elements and values thereof of the default Look and Feel package, thereby avoiding a vacancy of the Look and Feel.

In another embodiment, the terminal 300 further includes a determination unit 313 adapted to wait for an instruction from the user about whether to confirm a modification upon reception of the modification instruction and to activate the Look and Feel modification unit 314 upon the confirmed modification.

The user or the network sends to the terminal 300 an instruction to modify the current Look and Feel package in a way that the contents of the current Look and Feel package may be modified from one Look and Feel package to another or the value of an element in the current Look and Feel package may be modified. When the terminal 300 receives the instruction, the determination unit 313 of the terminal 300 makes a selection dialog box pop up for the user, which requests the user for confirming the modification of the current Look and Feel package; if the user confirms the modification, the determination unit 313 controls the Look and Feel modification unit 314 of the terminal to effectuate the modification of the current Look and Feel package; otherwise if the user rejects the modification, the determination unit 313 control the Look and Feel modification unit 314 to give up the modification of the current Look and Feel package and may return the information that the user rejects the modification to the network.

In this embodiment, the user is required to make a confirmation before the network or the user modifies the current Look and Feel package, thereby avoiding an operation in error.

In another embodiment, the terminal 300 further includes a Look and Feel query unit 317 adapted to receive a query instruction carrying the identifier of a target Look and Feel package to query the Look and Feel package storage unit 311 about the target Look and Feel package. If the identifier of the target Look and Feel package is the current identifier, the reference identifier in the current Look and Feel package and/or the elements and values thereof of the reference Look and Feel package corresponding to the reference identifier are returned. If the identifier of the target Look and Feel package is the identifier of the reference Look and Feel package, the elements and values thereof of the reference Look and Feel package are returned.

An illustrative example is given below.

The network sends a query instruction: Get (CurrPkg)

The terminal 300 returns a Look and Feel value: Results (CurrPkg, refPkgID, 10002)

Upon reception of the returned value, the network queries about the contents of the Look and Feel package corresponding to 10002 and obtains the Look and Feel package currently used for the terminal 300.

The Look and Feel query unit 317 is further adapted to receive a query instruction carrying the name of an element, queries the Look and Feel package storage unit 311 about the element and returns the name and the value of the element.

The network may also query about a Look and Feel element separately.

The network sends a query instruction: Get (CurrPkg\Wallpaper)

The terminal 300 returns the value of the element: Results (CurrPkg, Wallpaper, Snow. jpg)

Further, the user and the network may query about the value of a currently used Look and Feel package or the value of an element in two ways: 1) When the RefID is not a specific value, the value of the currently used Look and Feel may be obtained by returning the RefID; and 2) when the RefID is a specific value, the value of the element therein may be obtained through the path of the current Look and Feel package.

In this embodiment, a function of querying about a Look and Feel package may be implemented, and in comparison with the drawback in the prior art of the disability to search for a plurality of associated elements, the Look and Feel package required by the user may be obtained conveniently in accordance with a query instruction carrying the relevant identifier and thus achieve a relatively strong Look and Feel management ability.

When the server sends an instruction to activate a Look and Feel package to the terminal, if the Look and Feel currently used for the terminal is the Look and Feel package designated in this instruction, the activation instruction sent from the server will be a waste and may also cause an unexpected error. Therefore the use of the method for querying about the currently used Look and Feel package may optimize the Look and Feel management and may also provide other functions of such as obtaining a favorite Look and Feel of the user.

In another embodiment, the terminal 300 further includes a Look and Feel package rename unit 316 adapted to receive a rename instruction carrying a target Look and Feel identifier in which the rename corresponds to the Look and Feel package corresponding to the target Look and Feel identifier.

The network or the user may rename a Look and Feel package, and the name of the Look and Feel package may be stored in the Look and Feel package, where the name of the package may be stored in a parameter. In the DM way, the name of the package may also be stored by means of a node path. For example, when the user defines a Look and Feel package, and the path of which is ".\Customization\UserDefine", and when the network or the user renames the package, the terminal 300 may modify the node name of the Look and Feel package as ".\Customization\OurHouse".

After the name of the Look and Feel package is modified, its identifier shall also be modified correspondingly to ensure distinguishing from the Look and Feel package before the name is modified. In this way, the original selection will not be covered when a user-defined Look and Feel package is created subsequently.

In this embodiment, the Look and Feel package rename function may be implemented to enhance the Look and Feel management ability.

In another embodiment, the Look and Feel package storage unit 311 is a management tree with its Look and Feel package node further including an activation node, and the terminal 300 may further include a Look and Feel package activation unit adapted to receive an activation instruction carrying a target Look and Feel package identifier and to search for and activate an activation node attached to a corresponding target Look and Feel package node in the management tree.

After the network or the user modifies the current Look and Feel package of the terminal 300, the modified current Look and Feel package is applied in the terminal 300. Alternatively, the network or the user may select the opportunity for this application. For example, an element value is applied by a command.

For example, Activate (.\Customization\CurrPkg)

In the OMA DM way, an executable new node "Activation" is added newly under the current Look and Feel package node, and then an instruction to execute the node is sent by the network.

Exec (.\Customization\CurrPkg\Activation)

It shall also be noted that, the terminal 300 according to the above embodiments of the invention may be implemented in the form of hardware or software functional modules. The respective units may all be integrated together or any two or more of them may be integrated together, alternatively, the units may be physically separated. The above embodiments may be sold or used as an independent product or may be stored in a computer readable storage medium.

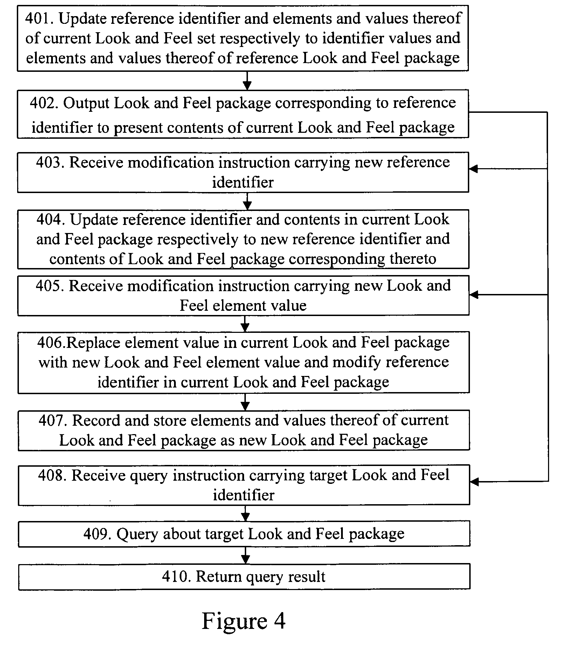

Referring to Figure 4, the Look and Feel management method according to a second embodiment of the invention is to pre-configure a reference Look and Feel package including an identifier, elements and values thereof on a terminal, and the method includes the following steps.

In Step 401, a reference Look and Feel package is activated, and a reference identifier and elements and values thereof are updated respectively to the value of the identifier and the elements and values thereof of the reference Look and Feel package.

In other words, if a current Look and Feel package is to be generated, the current Look and Feel package may be formed of the current identifier, the reference identifier and the contents of the reference Look and Feel package thereof.

In Step 402, the contents of the reference Look and Feel package corresponding to the reference identifier in the current Look and Feel package are output.

In another embodiment, the following steps are included after the step 402.

In Step 403, a modification instruction carrying a new reference identifier is received.

In Step 404, the reference identifier and the elements and values thereof in the current Look and Feel package are updated respectively to the new reference identifier and the elements and values thereof of the Look and Feel package corresponding to the new reference identifier.

In this embodiment, the reference identifier and the elements and values thereof of the current Look and Feel package may be modified directly in a way that the corresponding Look and Feel package is obtained in accordance with the new reference identifier in the modification instruction and the contents of the current Look and Feel package are covered with the contents of the corresponding Look and Feel package (the elements and values thereof), thereby simply, rapidly and conveniently realizing a modification of the current Look and Feel package and enriching the user experience.

In another embodiment, the following steps are included after the step 402.

In Step 405, a modification instruction carrying a new Look and Feel element value is received.

In Step 406, the Look and Feel element value in the current Look and Feel package is replaced with the new Look and Feel element value and the reference identifier in the current Look and Feel package is modified automatically.

In this embodiment, the value of an element in the current Look and Feel package may be modified separately and the reference identifier is also modify automatically to distinguish from the reference Look and Feel package corresponding to the original reference identifier.

After the modification, the reference identifier of the current Look and Feel package may further be reported to the server to notify the server about that the current Look and Feel package has been modified by the user.

In another embodiment, the following steps are further included after the Look and Feel element value is replaced with the new Look and Feel element value.

In Step 407, the elements and values thereof except the current identifier in the current Look and Feel package are recorded and stored in a new Look and Feel package.

In this embodiment, based upon the modification of the Look and Feel element, the modified current Look and Feel package is stored as a new Look and Feel package for later use.

In another embodiment, the following steps are included after the step 402.

A query instruction carrying a target Look and Feel identifier or element is received.

The target Look and Feel package or element is queried about and a query result is returned. If the target Look and Feel identifier carried in the query instruction is the current identifier, the query result is the reference identifier and/or the elements and values thereof of the reference Look and Feel package corresponding to the reference identifier; if the target Look and Feel identifier carried in the query instruction is the reference Look and Feel identifier, the query result is the elements and values thereof of the reference Look and Feel package; and if an element name is carried in the query instruction , the query result is an element name and an element value.

Descriptions will be given below respectively in two embodiments.
1) If the target Look and Feel identifier carried in the query instruction is the reference Look and Feel identifier:
   In Step 408, the query instruction carrying the reference Look and Feel identifier is received;
   In Step 409, the reference Look and Feel package is queried about; and
   In Step 410, the contents of the reference Look and Feel package obtained from the query are returned.
2) If the target Look and Feel identifier carried in the query instruction is the current Look and Feel identifier:
   In Step 411, the query instruction carrying the current identifier is received;
   In Step 412, the current Look and Feel package is queried about; and
   In Step 413, the reference identifier of the current Look and Feel package obtained from the query and/or the elements and values thereof of the reference Look and Feel package corresponding to the reference identifier.

In this embodiment, the function of querying about the current Look and Feel package may be implemented, in which the reference Look and Feel package and the contents thereof used for the current Look and Feel may be obtained through returning the reference identifier, thereby achieving a relatively strong Look and Feel management ability.

In this embodiment, the function of querying about a Look and Feel package may be implemented, and in comparison with the drawback in the prior art of the disability to search for a plurality of associated elements, the Look and Feel package required by the user may be obtained conveniently in accordance with the query instruction carrying the relevant identifier, thereby achieving a relatively strong Look and Feel management ability.

Those ordinarily skilled in the art may appreciate that all or part of the steps in the method according to the above embodiments may be implemented by a program instructing relevant hardware which may be stored in a computer readable storage medium and which when being executed may cause the following steps to be executed: pre-configuring a reference Look and Feel package including an identifier and elements and values thereof and a current Look and Feel package including a current identifier, a reference identifier and the contents of the reference Look and Feel package; and outputting the Look and Feel package corresponding to the reference identifier to present the contents of the current Look and Feel package. The storage medium here referred to includes, for example, an ROM/RAM, a magnetic disk, an optical disk.

In summary for above, the embodiments of the invention may provide the following technical effects.
1) A Look and Feel package and contents thereof may be managed rapidly and conveniently in the form of a package;
2) Various current Look and Feel packages may be obtained by modifying the reference identifier in the current Look and Feel package and the contents of the package corresponding to the reference identifier, thereby enriching presentation forms of Look and Feel themes of a terminal;
3) The reference identifier and the elements and values thereof of the current Look and Feel package may be modified directly, simply, rapidly and conveniently;
4) Numerous new Look and Feel packages may be obtained rapidly from a combination, thereby realizing the diversity of current Look and Feel packages and enriching Look and Feel themes;
5) The values of the elements in the current Look and Feel package may be modified separately while the reference identifier is modified to distinguish from the reference Look and Feel package corresponding to the original reference identifier;
6) Based upon the modified Look and Feel element, the modified current Look and Feel package may be stored as a new Look and Feel package to facilitate later use;
7) The current Look and Feel package may be updated with the default Look and Feel package, thereby avoiding a vacancy of Look and Feel;
8) The user may make a confirmation before the network or the user modifies the current Look and Feel package, thereby avoiding an operation in error;
9) The Look and Feel package required by the user may be obtained conveniently in accordance with a query instruction carrying a relevant identifier, thereby achieving a relatively strong Look and Feel management ability;
10) The Look and Feel package rename function may be implemented to enhance the Look and Feel management ability; and
11) The Look and Feel package activation function may be implemented.

The foregoing descriptions are illustrative of a terminal, a storage device, a Look and Feel management, presentation and query method by way of the embodiments thereof to facilitate understanding of the inventive method and the spirit thereof. Those ordinarily skilled in the art may make changes in the embodiments and applications thereof without departing from the spirit of the invention. Accordingly, the descriptions shall not be taken as a limitation of the scope of the invention as defined merely in the claims appended to the invention.

## Claims

1. A Look and Feel management method applicable to a terminal with a Look and Feel package pre-configured, **characterized by** comprising:
receiving a management instruction which indicates an operation for one of activation, modification or deletion of or query about the Look and Feel package; and
executing the operation for one of activation, modification or deletion of or query about the Look and Feel package in accordance with the management instruction.

2. The method according to claim 1, **characterized in that** the management instruction indicates an operation for query about the Look and Feel package, and
the executing of the operation for query about the Look and Feel package is:
returning information used to identify a current Look and Feel package.

3. The method according to claim 2, **characterized in that** if the Look and Feel package is the current Look and Feel package, the Look and Feel package comprises a current identifier, a reference identifier and contents of a reference Look and Feel package corresponding to the reference identifier; and if the Look and Feel is a reference Look and Feel package, the Look and Feel package comprises an identifier and elements and values of the elements.

4. The method according to claim 3, **characterized in that** the information used to identify the current Look and Feel package comprises: the reference identifier and/or the contents of the reference Look and Feel package.

5. The method according to claim 1, **characterized in that** the management instruction indicates an operation for modification and carries a new reference identifier, and the executing of the operation for modification of the Look and Feel package comprises:
updating a reference identifier and elements and values of the elements in a current Look and Feel package respectively to the new reference identifier and elements and values of the elements of a Look and Feel package corresponding to the new reference identifier.

6. The method according to claim 1, **characterized in that** the management instruction indicates an operation for modification and carries a new Look and Feel element value, and the executing of the operation for modification of the Look and Feel package comprises:
replacing a corresponding Look and Feel element value in a current Look and Feel package with the new Look and Feel element value and modifying a reference identifier in the current Look and Feel package to correspond to the modified current Look and Feel package.

7. The method according to claim 6, **characterized by** further comprising: recording and storing elements and values of the elements in the updated current Look and Feel package as a new Look and Feel package, after replacing the corresponding Look and Feel element value with the new Look and Feel element value.

8. The method according to claim 6, **characterized by** further comprising: after modifying the reference identifier in the current Look and Feel package to correspond to the modified current Look and Feel package, reporting the reference identifier of the modified current Look and Feel package to notify the server about that the current Look and Feel package has been modified by a user.

9. The method according to claim 1, **characterized in that** the management instruction indicates an operation for deletion, and the executing of the operation for deletion of the Look and Feel package comprises:
deleting contents in a current Look and Feel package, updating an identifier in a pre-configured default Look and Feel package as a reference identifier in the current Look and Feel package and updating elements and values of the elements in the pre-configured default Look and Feel package as elements and values of the elements of the current Look and Feel package.

10. The method according to claim 1, **characterized in that** the management instruction indicates an operation for activation, and the executing of the operation for activation of the Look and Feel package comprises:
applying a first reference Look and Feel package as a current Look and Feel.

11. The method according to claim 10, **characterized in that** the applying a first reference Look and Feel package as a current Look and Feel comprises:
setting a reference identifier value in a current Look and Feel package as an identifier value in the first reference Look and Feel package and copying contents of the first reference Look and Feel package into the current Look and Feel package.

12. A terminal, **characterized by** comprising:
a Look and Feel package storage unit adapted to store a pre-configured Look and Feel package;
a reception unit adapted to receive a management instruction which indicates an instruction for one of activation, modification or deletion of or query about the Look and Feel package;
an activation unit adapted to activate the Look and Feel package stored in the Look and Feel package storage unit in accordance with the management instruction received by the reception unit;
a deletion unit adapted to delete the Look and Feel package stored in the Look and Feel package storage unit in accordance with the management instruction received by the reception unit;
a modification unit adapted to modify the Look and Feel package stored in the Look and Feel package storage unit in accordance with the management instruction received by the reception unit;
an output unit adapted to output contents of the Look and Feel package stored in the Look and Feel package storage unit in accordance with the management instruction received by the reception unit; and
a query unit adapted to query about the Look and Feel package stored in the Look and Feel package storage unit in accordance with the management instruction received by the reception unit.

13. The terminal according to claim 12, **characterized in that** the query unit comprises:
a query sub-unit adapted to query about a current Look and Feel package stored in the Look and Feel package storage unit in accordance with the management instruction received by the reception unit; and
a return sub-unit adapted to return information used to identify the current Look and Feel package in accordance with a query result of the query sub-unit.

14. The terminal according to claim 12, **characterized in that** the modification unit comprises:
a reading sub-unit adapted to obtain a new reference identifier carried in the management instruction received by the reception unit; and
an update sub-unit adapted to update a reference identifier and elements and values of the elements in a current Look and Feel package stored in the Look and Feel package storage unit respectively to the new reference identifier and elements and values of the elements of a reference Look and Feel package corresponding to the new reference identifier, in accordance with the new reference identifier obtained by the reading sub-unit.

15. The terminal according to claim 12, **characterized in that** the modification unit comprises:
a reading sub-unit adapted to obtain a new Look and Feel element value carried in the management instruction received by the reception unit; and
an update sub-unit adapted to update a corresponding Look and Feel element value in a current Look and Feel package stored in the Look and Feel package storage unit to the new Look and Feel element value in accordance with the new Look and Feel element value obtained by the reading sub-unit and to modify a reference identifier in the current Look and Feel package to correspond to the modified current Look and Feel package.

16. The terminal according to claim 12, **characterized in that** the deletion unit comprises:
a deletion sub-unit adapted to delete contents in a current Look and Feel package stored in the Look and Feel package storage unit in accordance with the management instruction received by the reception unit; and
an update sub-unit adapted to update a reference identifier of the current Look and Feel package to an identifier in a pre-configured default Look and Feel package; and to update elements and values thereof of the current Look and Feel package to elements and values of the elements in the pre-configured default Look and Feel package.

17. The terminal according to claim 12, **characterized in that** the activation unit comprises:
an identification sub-unit adapted to set a reference identifier value in a current Look and Feel package stored in the Look and Feel package storage unit as an identifier value of a first reference Look and Feel package, in accordance with the management instruction received by the reception unit; and
a content sub-unit adapted to copy contents of the first reference Look and Feel package into the current Look and Feel package stored in the Look and Feel package storage unit, in accordance with the management instruction received by the reception unit.
